# EUROPEAN PATENT SPECIFICATION

(11) **EP 3 284 968 B1**
(45) Date of publication and mention of the grant of the patent: **11.03.2020**
(21) Application number: 16184705.8
(22) Date of filing: 18.08.2016
(51) Int. Cl.: F16F 15/133, F16F 1/18, F16F 1/368, F16D 3/56, F16D 3/62

(54) **LEAF SPRING AND TORSIONALLY ELASTIC COUPLING INCLUDING SAME**
BLATTFEDER UND DREHELASTISCHE KUPPLUNG MIT EINER SOLCHEN
RESSORT À LAMES ET ACCOUPLEMENT ÉLASTIQUE EN TORSION LE COMPRENANT

(43) Date of publication of application: 21.02.2018
(73) Proprietor: Ellergon Antriebstechnik GmbH, 5300 Hallwang/Salzburg (AT)
(72) Inventor: Geislinger, Matthias, 5300 Hallwang (AT)
(74) Representative: Beck & Rössig European Patent Attorneys

(56) References cited:
- EP-A2- 1 164 304
- WO-A1-2007/107138
- WO-A1-2016/020584
- GB-A- 2 050 570
- US-A1- 2015 097 352
- US-A1- 2015 139 746

## Description

The present invention relates to a leaf spring and more specifically to a leaf spring that is suitable for transmitting a torque. Further, the present invention relates to a torsionally elastic coupling including two or more leaf springs.

A leaf spring for use in a torsionally elastic coupling in the sense of the preamble portion is known from EP 1 164 304 A2. The known leaf spring has first and second end portions which are movable relative to each other against an elastic reactive force. In a torsionally elastic coupling two or more of such leaf springs each connect a first rotary member and a second rotary member of the coupling to transmit torque while providing a defined degree of elasticity and damping about the axis of rotation of the coupling.

The leaf springs disclosed in EP 1 164 304 A2 are substantially U-shaped when viewed in a plane perpendicular to the axis of rotation of the coupling. Each leaf spring has two arms extending in a radial direction and connected by a bend providing a turn of approximately 180°. However, the potential of such leaf springs for compensating radial, axial and angular displacements between the first and second rotary member in a coupling is limited.

Another U-shaped leaf spring having two oppositely arranged arms connected by a bend is known from US 2015/0139746 A1.

The present invention aims at providing a leaf spring suitable for transmitting torque, which is able to compensate larger displacements between its end portions.

This technical problem is solved by a leaf spring as defined in claim 1.

By providing three arms that are angled relative to each other between the end portions of the leaf spring it will be possible to compensate larger displacements while providing defined torque transmitting properties between the end portions of the leaf spring.

The particular arrangement of the second and third arm allows to compensate displacements in a first direction while the first arm and second end portion allow to compensate displacements in a second direction substantially perpendicular to the first direction.

Advantageous embodiments of the invention are indicated in further claims.

Preferably, the third arm is angled to the second end portion to further increase the potential for compensating displacements. In addition, the second end portion may provide an abutment surface for the first arm to thereby limit relative movement between the first and second end portions of the leaf spring.

Further, the first end portion may be angled to the first arm of the L-shaped portion to thereby provide a very compact design of the leaf spring which is of particular advantage when a plurality of leaf springs is mounted in a torsionally elastic coupling since this may reduce the outer diameter of the coupling.

In another preferred embodiment the second arm may be longer than the third arm.

Further, all arms, i.e. the first arm, the second arm and the third arm may be substantially straight or at least have straight portions while said arms are connected with each other via smoothly curved bends.

In yet another preferred embodiment the acute angle between the second arm of the L-shaped portion and the third arm may be within a range from 5° to 45°. It was found that this provides proper compensation of displacements without impairing torque transmission.

Further, the second end portion may be angled to the third arm at an angle within a range of 80° to 100° to form another L-shaped structure in addition to said L-shaped portion formed by the first and second arm. This substantially similar shape provides the advantage of good space economy.

Similarly, the first arm of the L-shaped portion is angled to the second arm of the L-shaped portion by an angle within a range of 80° to 100°.

In yet another preferred embodiment lines drawn along the neutral axes of the first, second and third arm intersect at three intersection points. These three intersection points define a triangle which has one angle within a range of 80 to 100° and another angle that is less than 30°.

In another preferred embodiment the second arm and a third arm are provided with one or more slots, each slot extending in a plane intersecting both the second arm and the third arm to thereby divide each arm in two or more parallel sections that are spaced apart from each other by a gap, respectively. This enhances the potential for compensating axial displacements in a coupling, i.e. displacements in a direction of the axis of rotation or, in other words, perpendicular to said plane of the second and third arm.

Further, the first arm and the second arm of the L-shaped portion may be arranged in a common plane, wherein the first arm defines two or more spring sections extending in longitudinal direction and being separated by one or more layers of elastomeric material. These layers of elastomeric material are perpendicular to said common plane of the L-shaped portion and are thus exposed to shear stress to provide increased damping. If lower damping is required, the elastomeric material between the spring sections may be omitted.

The invention also provides a torsionally elastic coupling, comprising a first rotary member and a second rotary member configured to rotate about a common axis of rotation, two or more leaf springs as described above, which are arranged in a plane of arrangement that is perpendicular to said common axis of rotation, wherein the first end portion of each leaf spring is secured to the first rotary member and the second end portion of each leaf spring is secured to the second rotary member.

As compared to EP 1 164 304 A2, the inventive coupling is able to compensate substantially larger radial and angular displacements between the first and second rotary member and thus can be used in drive trains with highly elastic engine supports. Axial displacements can be countered by slots in the second and third arms.

In a preferred embodiment the first arm of the L-shaped portion is inclined with respect to a radial direction of the coupling which may be useful where a larger torque is to be transmitted in one direction than in opposite direction.

The first arm of the L-shaped portion may be angled in said plane of arrangement to a radial beam passing through the axis of rotation at an angle within a range of 15° to 60°.

In yet a preferred embodiment the second end portion has a radial abutment surface for limiting radially outward movement of the second arm of the L-shaped portion. Similarly, the second end portions may serve as a limit stopper for the first arm in circumferential direction of the coupling to limit elastic deformation of the arms of the leaf springs. This may provide overload protection and can also be used to define a high torque transmission range with significantly higher torsional stiffness.

Embodiments of the invention will be described hereinafter with reference to the drawings wherein:
- Fig. 1: shows an exemplary embodiment of a leaf spring according to the invention,
- Fig. 2: shows a side view of the leaf spring of Fig. 1,
- Fig. 3: shows an exemplary embodiment of a torsionally elastic coupling including a plurality of leaf springs according to the invention,
- Fig. 4: shows a side view of the torsionally elastic coupling of Fig. 3.

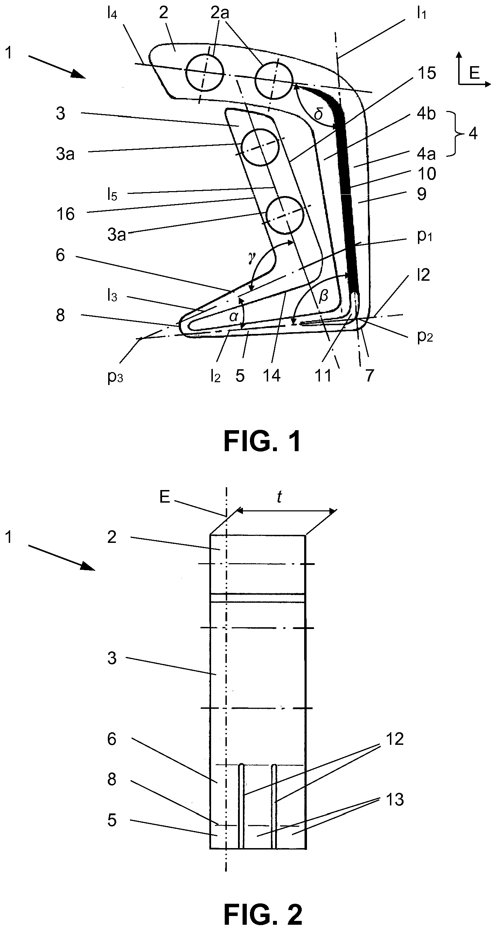

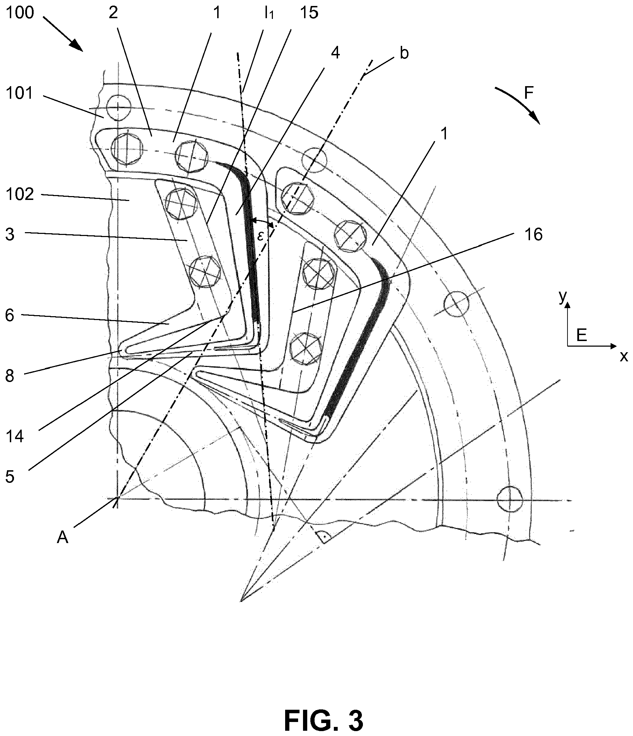

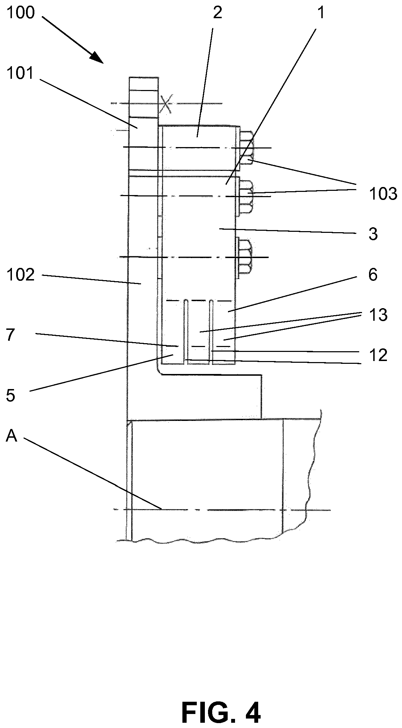

Figs. 1 and 2 show an exemplary embodiment of a leaf spring 1 which can be used e.g. in a coupling 100 as shown in Figs. 3 and 4 for transmitting torque.

The leaf spring 1 has a first end portion 2 and a second end portion 3 which are movable relative to each other against an elastic reactive force of the leaf spring. As shown in Figs. 3 and 4, the leaf spring 1 can be releasably mounted in the coupling 100 at its first and second end portions 2 and 3. In order to secure said end portions 2 and 3 to first and second rotary members 101 and 102 of the coupling 100, each end portion 2 and 3 is provided with preferably two or more bores 2a and 3a. The first and second end portion 2 and 3 of the leaf spring 1 may thus be secured to the first and second rotary members 101 and 102 of the coupling 100 by screws 103.

The first end portion 2 and the second end portion 3 of the leaf spring 1 are connected by three arms 4, 5 and 6 which are arranged in sequence. The arms 4, 5, and 6 are substantially straight, as long as they are not deformed, and are connected by smoothly curved bends 7 and 8.

All three arms 4, 5 and 6 and the first and second end portion 2 and 3 of the leaf spring 1 extend in a common plane E that is perpendicular to the axis of rotation A of the coupling 100. The thickness t of the leaf spring 1 is chosen is response to the torque that is to be transmitted. In particular, the leaf spring 1 may have a constant thickness t.

The leaf spring 1 may be made from spring steel or fiber composite materials as disclosed in EP 1 164 304 A2.

In order to compensate large displacements in a coupling 100, i.e. corresponding displacements between the first and second end portions 2 and 3, the arms 4, 5, and 6 of the leaf spring 1 are arranged in a particular manner.

The first and second arm 4 and 5 define an L-shaped portion 9 of the leaf spring 1. This L-shaped portion 9 is connected to the first end portion 2 via the first arm 4. The first end portion 2 may be angled to the first arm 4 of the L-shaped portion 9 to reduce the outer diameter of the coupling 100. In other implementations the first end portion 2 may simply continue the longitudinal direction of the first arm 4.

The third arm 6 extends from the second end portion 3 of the leaf spring 1. The second end portion 3 is preferably angled to the third arm 6 but may as well continue the longitudinal direction of the third arm 6. In the embodiment shown in Figs. 1 and 2 the second end portion 3 and the third arm 6 form an L-shaped structure similar in shape to the L-shaped portion 9 of the first and second arms 4 and 5.

The second arm 5 of the L-shaped portion 9 and the third arm 6 are connected at their ends by the bend 8 in such manner that the third arm 6 extends from the bend 8 in a direction towards the first arm 4 of the L-shaped portion 9 under an acute angle α to the second arm 5 of the L-shaped portion 9.

Both L-shaped structures, i.e. the L-shaped portion 9 and the structure formed by the second end portion 3 and the third arm 6, are hinged by the bend 8 and are rotationally offset around that hinge by the acute angle α. In order to achieve this the second arm 5 is longer than the third arm 6.

Lines l₁, l₂, l₃ drawn along the neutral axes of the first arm 4, the second arm 5 and the third arm 6 intersect at three intersection points p₁, p₂ and p₃. These three intersection points p₁, p₂ and p₃ define a triangle, wherein at least one angle is within a range of 80° to 100° and another angle that is less than 30°.

Line l₄ in Fig. 1 indicates the longitudinal axis of the first end portion 2 and line l₅ indicates the longitudinal axis of the second end portion 3 of the leaf spring 1.

Preferably, the angular arrangement of the afore-mentioned lines is as follows:
The acute angle α between the second arm 5 and the third arm 6, i.e. between lines l₂ and l₃ is within a range from 5° to 45°, and preferably within a range from 5° to 35°.

The first arm 4 of the L-shaped portion 9 is angled to the second arm 5 by an angle β, between lines l₁ and l₂, within a range of 80° to 100°.

The corresponding angle γ between the second end portion 3 and the third arm 6, i.e. between lines l₃ and l₅, is within a range of 80° to 100°.

Finally, the angle δ between the first end portion 2 and the first arm 4 of the L-shaped portion 9, i.e. between lines l₁ and l₄, may be within a range of 85° to 145°.

The torsional stiffness and damping properties of the leaf spring 1 are defined primarily by the first arm 4, which can be dimensioned appropriately. The first arm 4 may be formed as a single spring or, as shown in Fig. 1, have two or more spring sections 4a and 4b which extend in longitudinal direction of the first arm 4 and which are separated from each other by one or more layers of elastomeric material 10. The layers of elastomeric material 10 are perpendicular to plane E and increase the attenuation coefficient of the leaf spring 1. If less damping is required, the layers of elastomeric material 10 may be omitted so that the spring sections 4a and 4b of the first arm 4 are spaced apart from each other by gaps 11. The layers of elastomeric material 10 or gaps 11 may extend into the second arm 5 and into the first end portion 2. Fig. 1 shows two spring sections 4a and 4b. However, their number may be increased if required.

Compensation of displacement between the first and second end portions 2 and 3 in plane E is primarily achieved by the first, second and third arms 4, 5 and 6, which may deform elastically.

In addition, these arms may be slotted as shown in Fig. 2. The second arm 5 and the third arm 6 may be provided with one or more slots 12. Each of these slots 12 extends in a plane - parallel to plane E -, intersecting both the second arm 5 and the third arm 6 to thereby divide each arm 5 and 6 in two or more parallel sections 13 that are spaced apart from each other by a gap. This improves the capability of compensating displacements in a direction perpendicular to plane E, i.e. in the direction of the axis of rotation A of the coupling. In addition, this enhances compensation of angular displacements. If very high axial displacement is required, the slots 12 may be extended into the first arm 4 or spring sections 4a and 4b thereof.

Figs. 3 and 4 show one example for the implementation of a plurality of leaf springs 1 in a torsionally elastic coupling 100. These springs 1 are arranged in a common plane of arrangement E in circumferential direction around the axis of rotation A. The first end portion 2 of each leaf spring 1 is secured to the first rotary member 101 and the second end portion 3 of each leaf spring 1 is secured to the second rotary member 102 of the coupling 100.

In the present case the first arms 4 of the leaf springs 1 are inclined with respect to a radial direction of the coupling 100, respectively. The coupling may thus transmit higher torque in one direction than in opposite direction. Fig. 3 shows first arms 4 pointing with their radially inner ends in forward direction F for transmitting higher torque in that direction. In the plane of arrangement, the first arms 4 of the L-shaped portions 9 may be angled to a radial beam b passing through the axis of rotation A at an angle ε within a range of 15° to 60°. However, it is also possible to reduce angle ε to zero so that the first arms 4 extend in radial direction of the coupling 100.

The structure of the leaf springs 1 not only enhances the potential for compensating displacements but also provides an overload protection without the need for additional parts. In the present case the second end portion 3 has a radial abutment surface 14 for limiting radially outward movement of the second arm 5. Moreover, the second end portion 3 provides a limit stopper 15 in circumferential direction to limit elastic deformation of the arms 4, 5 and 6 of the leaf springs 1. Such abutment can also be used to define a high torque transmission range with significantly higher torsional stiffness than under normal operation. If the leaf springs 1 are arranged closely in circumferential direction, a second end portion 3 of a neighboring leaf spring 1 may also provide a limit stopper 16 in opposition direction of rotation.

Depending on the angular position of the leaf springs 1 in the coupling 100, radial displacement between the first and second rotary members 101 and 102 results in different loads and deformations of the leaf springs 1. A radial displacement in direction y in Fig. 3 will result in deformation of the second arm 5 and third arm 6 of the upper leaf spring 1, i.e. the spring at 12 o'clock position, while a leaf spring 1 that is in a position rotated by 90°, i.e. in 3 o'clock position, will compensate the same radial displacement in direction y primarily by bending of the first arm 4.

The invention has been described in detail on the basis of certain embodiments and modifications thereof. It is, however, not limited to these embodiments and modifications but rather encompasses all embodiments as defined by the claims.

## Claims

1. Leaf spring, having
a first end portion (2) and a second end portion (3) configured to be secured to a first rotary member (101) and a second rotary member (102), respectively, and movable relative to each other against an elastic reactive force,
wherein compensation of displacement between the first end portion (2) and the second end portion (3) is achieved by a first arm (4), a second arm (5), and a third arm (6), wherein a first L-shaped portion (9) is formed by said first arm (4) and said second arm (5), said first L-shaped portion (9) extending from said first end portion (2),
a third arm (6) extends from said second end portion (3), and
the second arm (5) of the L-shaped portion (9) and the third arm (6) are connected through a bend (8), the third arm (6) extending from the bend (8) in a direction towards the first arm (4) of the L-shaped portion (9) and at an acute angle (α) to the second arm (5) of the L-shaped portion (9),
**characterized in that** the first arm (4), the second arm (5), and the third arm (6) are each configured to deform elastically in a mounted state.

2. Leaf spring according to claim 1, **characterized in that** the second end portion (3) is angled to the third arm (6).

3. Leaf spring according to claim 1 or 2, **characterized in that** the first end portion (2) is angled to the first arm (4) of the L-shaped portion (9).

4. Leaf spring according to one of claims 1 to 3, **characterized in that** the first end portion (2), the second end portion (3) and the first arm (4), second arm (5) and third arm (6) extend in a plane (E).

5. Leaf spring according to one of claims 1 to 4, **characterized in that** the second arm (5) is longer than the third arm (6).

6. Leaf spring according to one of claims 1 to 5, **characterized in that** the acute angle (α) is within a range from 5° to 45°.

7. Leaf spring according to one of claims 1 to 6, **characterized in that** the second end portion (3) is angled to the third arm (6) at an angle (γ) within a range of 80° to 100°.

8. Leaf spring according to one of claims 1 to 7, **characterized in that** lines (l₁, l₂, l₃) drawn along the neutral axes of the first, second and third arm (4, 5, 6) intersect at three intersection points (p₁, p₂, p₃), said three intersection points (p₁, p₂, p₃) defining a triangle, wherein the triangle has one angle within a range of 80° to 100° and another angle that is less than 30°.

9. Leaf spring according to one of claims 1 to 8, **characterized in that** the first arm (4) of the L-shaped portion (9) is angled to the second arm (5) of the L-shaped portion (9) by an angle (β) within a range of 80° to 100°.

10. Leaf spring according to one of claims 1 to 9, **characterized in that** the second arm (5) and a third arm (6) are provided with one or more slots (12), each slot (12) extending in a plane intersecting both the second arm (5) and the third arm (6) to thereby divide each arm (5, 6) into one or more parallel sections (13) that are spaced apart from each other by a gap.

11. Leaf spring according to one of claims 1 to 10, **characterized in that** first arm (4) and the second arm (5) of the L-shaped portion (9) are arranged in a common plane, wherein the first arm defines (4) two or more sections (4a, 4b) extending in longitudinal direction and separated by one or more layers of elastomeric material (10), said layers of elastomeric material (10) being perpendicular to said common plane.

12. Torsionally elastic coupling (100), comprising
a first rotary member (101) and a second rotary member (102) configured to rotate about a common axis of rotation (A),
two or more leaf springs (1) according to any of the preceding claims, which are arranged in a plane of arrangement (E) that is perpendicular to said common axis of rotation (A), wherein the first end portion (2) of each leaf spring (1) is secured to the first rotary member (101) and the second end portion (3) of each leaf spring (1) is secured to the second rotary member (102).

13. Torsionally elastic coupling according to claim 12, **characterized in that** the first arm (4) of the L-shaped portion (9) is inclined with respect to a radial direction of the coupling.

14. Torsionally elastic coupling according to claim 12 or 13, **characterized in that** in said plane of arrangement (E) the first arm (4) of the L-shaped portion (9) is angled to a radial beam passing through the axis of rotation (A) at an angle (ε) within a range of 15° to 60°.

15. Torsionally elastic coupling according to one of claims 12 to 14, **characterized in that** the second end portion (3) has a radial abutment surface (14) for limiting radially outward movement of the second arm (5) of the L-shaped portion (9).

## Patentansprüche

1. Blattfeder, umfassend:
einen ersten Endabschnitt (2) und einen zweiten Endabschnitt (3), die dazu ausgelegt sind, jeweils an einem ersten Drehelement (101) und einem zweiten Drehelement (102) gesichert zu werden, und die relativ zueinander gegen eine reaktive Federkraft bewegbar sind,
wobei eine Kompensation der Verschiebung zwischen dem ersten Endabschnitt (2) und dem zweiten Endabschnitt (3) durch einen ersten Arm (4), einen zweiten Arm (5) und einen dritten Arm (6) erzielt wird,
wobei ein erster L-förmiger Abschnitt (9) durch den ersten Arm (4) und den zweiten Arm (5) gebildet wird, wobei der erste L-förmige Abschnitt (9) sich von dem ersten Endabschnitt (2) erstreckt,
ein dritter Arm (6) sich von dem zweiten Endabschnitt (3) erstreckt, und
der zweite Arm (5) des L-förmigen Abschnitts (9) und der dritte Arm (6) durch eine Biegung (8) verbunden sind, wobei der dritte Arm (6) sich von der Biegung (8) in einer Richtung auf den ersten Arm (4) des L-förmigen Abschnitts (9) zu und in einem spitzen Winkel (α) zu dem zweiten Arm (5) des L-förmigen Abschnitts (9) erstreckt,
**dadurch gekennzeichnet, dass** der erste Arm (4), der zweite Arm (5) und der dritte Arm (6) jeweils dazu ausgelegt sind, sich in einem montierten Zustand elastisch zu verformen.

2. Blattfeder nach Anspruch 1, **dadurch gekennzeichnet, dass** der zweite Endabschnitt (3) zu dem dritten Arm (6) angewinkelt ist.

3. Blattfeder nach Anspruch 1 oder 2, **dadurch gekennzeichnet, dass** der erste Endabschnitt (2) zu dem ersten Arm (4) des L-förmigen Abschnitts (9) angewinkelt ist.

4. Blattfeder nach einem der Ansprüche 1 bis 3, **dadurch gekennzeichnet, dass** sich der erste Endabschnitt (2), der zweite Endabschnitt (3) und der erste Arm (4), der zweite Arm (5) und der dritte Arm (6) in einer Ebene (E) erstrecken.

5. Blattfeder nach einem der Ansprüche 1 bis 4, **dadurch gekennzeichnet, dass** der zweite Arm (5) länger als der dritte Arm (6) ist.

6. Blattfeder nach einem der Ansprüche 1 bis 5, **dadurch gekennzeichnet, dass** der spitze Winkel (α) in einem Bereich von 5° bis 45° liegt.

7. Blattfeder nach einem der Ansprüche 1 bis 6, **dadurch gekennzeichnet, dass** der zweite Endabschnitt (3) zu dem dritten Arm (6) in einem Winkel (γ) in einem Bereich von 80° bis 100° angewinkelt ist.

8. Blattfeder nach einem der Ansprüche 1 bis 7, **dadurch gekennzeichnet, dass** sich Linien (l₁, l₂, l₃), die entlang der neutralen Achsen des ersten, zweiten und dritten Arms (4, 5, 6) gezogen werden, an drei Schnittpunkten (p₁, p₂, p₃) schneiden, wobei die drei Schnittpunkte (p₁, p₂, p₃) ein Dreieck definieren, wobei das Dreieck einen Winkel in einem Bereich von 80° bis 100° aufweist sowie einen weiteren Winkel, der weniger als 30° beträgt.

9. Blattfeder nach einem der Ansprüche 1 bis 8, **dadurch gekennzeichnet, dass** der erste Arm (4) des L-förmigen Abschnitts (9) zu dem zweiten Arm (5) des L-förmigen Abschnitts (9) mit einem Winkel (β) in einem Bereich von 80° bis 100° angewinkelt ist.

10. Blattfeder nach einem der Ansprüche 1 bis 9, **dadurch gekennzeichnet, dass** der zweite Arm (5) und der dritte Arm (6) mit einem oder mehreren Schlitzen (12) versehen sind, wobei sich jeder Schlitz (12) in einer Ebene erstreckt, die sowohl den zweiten Arm (5) als auch den dritten Arm (6) kreuzt, um dadurch die einzelnen Arme (5, 6) in einen oder mehrere parallele Abschnitte (13) zu unterteilen, die durch einen Spalt voneinander beabstandet sind.

11. Blattfeder nach einem der Ansprüche 1 bis 10, **dadurch gekennzeichnet, dass** der erste Arm (4) und der zweite Arm (5) des L-förmigen Abschnitts (9) in einer gemeinsamen Ebene angeordnet sind, wobei der erste Arm (4) zwei oder mehr Abschnitte (4a, 4b) definiert, die sich in einer Längsrichtung erstrecken und durch eine oder mehrere Schichten eines elastomeren Materials (10) getrennt sind, wobei die Schichten des elastomeren Materials (10) senkrecht zu der gemeinsamen Ebene verlaufen.

12. Drehelastische Kupplung (100), umfassend
ein erstes Drehelement (101) und ein zweites Drehelement (102), die dazu ausgelegt sind, sich um eine gemeinsame Drehachse (A) zu drehen,
zwei oder mehr Blattfedern (1) nach einem der vorhergehenden Ansprüche, welche in einer Anordnungsebene (E) angeordnet sind, die senkrecht zu der gemeinsamen Drehachse (A) verläuft, wobei der erste Endabschnitt (2) jeder Blattfeder (1) an dem ersten Drehelement (101) befestigt ist und der zweite Endabschnitt (3) jeder Blattfeder (1) an dem zweiten Drehelement (102) befestigt ist.

13. Drehelastische Kupplung nach Anspruch 12, **dadurch gekennzeichnet, dass** der erste Arm (4) des L-förmigen Abschnitts (9) bezüglich einer radialen Richtung der Kupplung geneigt ist.

14. Drehelastische Kupplung nach Anspruch 12 oder 13, **dadurch gekennzeichnet, dass** in der Anordnungsebene (E) der erste Arms (4) des L-förmigen Abschnitts (9) zu einem radialen Strahl, der durch die Drehachse (A) verläuft, mit einem Winkel (ε) in einem Bereich von 15° bis 60° angewinkelt ist.

15. Drehelastische Kupplung nach einem der Ansprüche 12 bis 14, **dadurch gekennzeichnet, dass** der zweite Endabschnitt (3) eine radiale Anschlagfläche (14) aufweist, um eine radial nach außen gerichtete Bewegung des zweiten Arms (5) des L-förmigen Abschnitts (9) zu begrenzen.

## Revendications

1. Ressort à lames ayant
une première portion d'extrémité (2) et une seconde portion d'extrémité (3) configurées pour être fixées respectivement à un premier organe rotatif (101) et à un second organe rotatif (102) et mobiles l'une par rapport à l'autre à l'encontre d'une force réactive élastique, cependant qu'une compensation de déplacement entre la première portion d'extrémité (2) et la seconde portion d'extrémité (3) est réalisée par un premier bras (4), un second bras (5) et un troisième bras (6),
cependant qu'une première portion en forme de L (9) est formée par ledit premier bras (4) et ledit second bras (5), ladite première portion en forme de L (9) s'étendant à partir de ladite première portion d'extrémité (2),
un troisième bras (6) s'étend à partir de ladite seconde portion d'extrémité (3) et
le second bras (5) de la portion en forme de L (9) et le troisième bras (6) sont reliés par une courbure (8), le troisième bras (6) s'étendant de la courbure (8) dans une direction vers le premier bras (4) de la portion en forme de L (9) et à un angle aigu (α) avec le second bras (5) de la portion en forme de L (9),
**caractérisé en ce que** le premier bras (4), le second bras (5) et le troisième bras (6) sont configurés chacun pour se déformer élastiquement dans un état monté.

2. Ressort à lames selon la revendication 1, **caractérisé en ce que** la seconde portion d'extrémité (3) fait un angle avec le troisième bras (6).

3. Ressort à lames selon la revendication 1 ou 2, **caractérisé en ce que** la première portion d'extrémité (2) fait un angle avec le premier bras (4) de la portion en forme de L (9).

4. Ressort à lames selon l'une des revendications 1 à 3, **caractérisé en ce que** la première portion d'extrémité (2), la seconde portion d'extrémité (3) et le premier bras (4), le second bras (5) et le troisième bras (6) s'étendent dans un plan (E).

5. Ressort à lames selon l'une des revendications 1 à 4, **caractérisé en ce que** le second bras (5) est plus long que le troisième bras (6).

6. Ressort à lames selon l'une des revendications 1 à 5, **caractérisé en ce que** l'angle aigu (α) est de l'ordre de 5° à 45°.

7. Ressort à lames selon l'une des revendications 1 à 6, **caractérisé en ce que** la seconde portion d'extrémité (3) fait un angle avec le troisième bras (6) à un angle (γ) de 80° à 100°.

8. Ressort à lames selon l'une des revendications 1 à 7, **caractérisé en ce que** les lignes (l₁, l₂, l₃) tirées le long des axes neutres du premier, du second et du troisième bras (4, 5, 6) se coupent à trois points d'intersection (p₁, p₂, p₃), lesdits trois points d'intersection (p₁, p₂, p₃) définissant un triangle, cependant que le triangle a un angle de l'ordre de 80° à 100° et un autre angle qui est inférieur à 30°.

9. Ressort à lames selon l'une des revendications 1 à 8, **caractérisé en ce que** le premier bras (4) de la portion en forme de L (9) fait un angle avec le second bras (5) de la portion en forme de L (9) avec un angle (β) de l'ordre de 80° à 100°.

10. Ressort à lames selon l'une des revendications 1 à 9, **caractérisé en ce que** le second bras (5) et un troisième bras (6) sont pourvus d'une ou de plusieurs fentes (12), chaque fente (12) s'étendant dans un plan qui coupe à la fois le second bras (5) et le troisième bras (6) en divisant chaque bras (5, 6) en une ou plusieurs sections parallèles (13) qui sont espacées l'une de l'autre par un espace.

11. Ressort à lames selon l'une des revendications 1 à 10, **caractérisé en ce que** le premier bras (4) et le second bras (5) de la portion en forme de L (9) sont disposés dans un plan commun, le premier bras définissant (4) deux ou plusieurs sections (4a, 4b) qui s'étendent dans le sens longitudinal et qui sont séparées par une ou plusieurs couches de matériau élastomère (10), lesdites couches de matériau élastomère (10) étant perpendiculaires audit plan commun.

12. Couplage élastique en torsion (100) comprenant
un premier organe rotatif (101) et un second organe rotatif (102) configurés pour tourner autour d'un axe de rotation commun (A),
deux ou plusieurs ressorts à lames (1) selon l'une quelconque des revendications précédentes qui sont disposés dans un agencement de plan (E) qui est perpendiculaire audit axe de rotation commun (A), la première portion d'extrémité (2) de chaque ressort à lames (1) étant fixée au premier organe rotatif (101) et la seconde portion d'extrémité (3) de chaque ressort à lames (1) étant fixée au second organe rotatif (102).

13. Couplage élastique en torsion selon la revendication 12, **caractérisé en ce que** le premier bras (4) de la portion en forme de L (9) est incliné par rapport à une direction radiale du couplage.

14. Couplage élastique en torsion selon la revendication 12 ou 13, **caractérisé en ce que** dans ledit agencement de plan (E) le premier bras (4) de la portion en forme de L (9) fait un angle avec un rayon radial qui traverse l'axe de rotation (A) à un angle (ε) de l'ordre de 15° à 60°.

15. Couplage élastique en torsion selon l'une des revendications 12 à 14, **caractérisé en ce que** la seconde portion d'extrémité (3) a une surface de butée radiale (14) pour limiter le déplacement radialement vers l'extérieur du second bras (5) de la portion en forme de L (9).
